# EUROPEAN PATENT SPECIFICATION

(11) **EP 1 196 910 B1**
(45) Date of publication and mention of the grant of the patent: **18.07.2007**
(21) Application number: 00912248.2
(22) Date of filing: 27.03.2000
(51) Int. Cl.: G09F 13/18, G02B 6/00

(54) **DISPLAY DEVICE**
ANZEIGEVORRICHTUNG
DISPOSITIF D'AFFICHAGE

(30) Priority: 26.03.1999 AU PP944699
(43) Date of publication of application: 17.04.2002
(73) Proprietor: B.T.B.H. Holdings Limites, 1521 Nicosia (CY)
(72) Inventor: PALMER, Glen, Scott, Mt Eliza, Victoria 3930 (AU); MOLLOY, Glenn, David, Seaford, Victoria 3198 (AU)
(74) Representative: Dunlop, Brian Kenneth Charles
(86) International application number: PCT/AU2000/000252
(87) International publication number: WO 2000/058931

(56) References cited:
- EP-A- 0 544 332
- WO-A-97/40486
- WO-A-98/12690
- US-A- 5 390 436
- PATENT ABSTRACTS OF JAPAN vol. 017, no. 643 (P-1651), 29 November 1993 (1993-11-29) & JP 05 210014 A (DAIMON SEISAKUSHO:KK), 20 August 1993 (1993-08-20)

## Description

### Field of the Invention

This invention relates to a display device of particular, though not exclusive, application to illuminated display systems such as illuminated display boards.

### Reference to related patent

This invention is an improvement in the invention disclosed and defined in Australian patent AU 647834, the contents of which are hereby incorporated by reference. Throughout this specification Australian Patent AU 647834 is referred to as the "earlier patent".

### Background to the Invention

In the earlier patent there is disclosed an illuminated display system including a transparent medium having two opposing surfaces to be illuminated. The illumination is from the lower-most edge of the transparent medium. Both surfaces to be illuminated have a matrix of dots substantially covering the surfaces, resulting in an increased illumination of the surfaces.

The results using the invention of the earlier patent are an improvement over the known art, but further improvement is believed to be possible. Furthermore, the display system of the earlier patent involves the task, and associated cost, of printing a matrix of dots on both surfaces of the transparent medium.

In the earlier patent "dots" are defined as being of any size or shape, and are said to be transparent or opaque and more preferably light-coloured, for example white.

"Matrix" is defined in the earlier patent as any display or array of dots. "Transparent medium" is defined as being one or more transparent sheets, which may be glass or plastic, but are preferably acrylic.

These definitions are also adopted for this specification, including the claims.

It is the principal object of the present invention to provide a display device for use in an illuminated display system having improved performance over that disclosed in the earlier patent.

Another known display device is described in Japanese publication number JP 05210014, which includes a large number of projections moulded integrally on one surface of a light transmission plate. The ends of the projections are roughened and together with the reflecting rear side of the plate lead to a reflecting effect.

### Summary of the Invention

With the above and other objects in mind, the present invention provides a display device for use in an illuminated display system. The device has a transparent medium with first and second opposing surfaces to be illuminated in use. At least one of the first and second opposing surfaces has printed thereon a matrix of spots each having a hollow transparent interior which allows passage of light therethrough and defines an internal edge for refracting light, thereby enhancing illumination of said at least one surface. The matrix of spots does not form a or part of a message or information to be illuminated.

Preferably, the matrix covers substantially the entire surface to be illuminated.

"Spots" used in this specification, including the claims, can be of any size or shape, for example round, rectangular, ellipsoid, polygonal, triangular or irregular. A convenient and advantageous shape is an annulus.

Preferably, the hollow interior of each spot is of a shape corresponding to the outer periphery of the spot. Alternatively, the hollow interior may be of a shape different to the outer periphery of the spot. and second surfaces may have the matrix of spots thereon.

Preferably, the spots increase in size, preferably both of the external periphery and of the hollow interior periphery, with increasing distance from an edge of the medium at which a light source is located in use of the display system.

In the display system described and illustrated in the earlier patent, the dots are solid. It has been realised that by having spots with hollow transparent interiors instead of dots, light can pass not only around the outer edge of each spot, but through the hollow interior of each spot, and the adjacent edge of each hollow interior. In passing each edge, there is a refraction, or bending, of the light. It is thought that this refraction or bending of light contributes to the functionality of the display system of the earlier patent, and the present inventors have appreciated that by substituting spots having hollow transparent interiors for the dots of the prior system, the linear edge available for refraction of the light is significantly increased, and the performance of the system enhanced in terms of increased and/or more even illumination.

### Brief Description of the Drawings

The invention will be further described by way of example only with reference to the accompanying drawings, in which:
Figure 1 is a cross-sectional view, not to scale, of an illuminated display system incorporating a device according to an embodiment of the invention; and
Figure 2 is an elevational view of the front surface of the transparent panel of the device, on the line 2-2 in Figure 1.

### Description of Preferred Embodiment

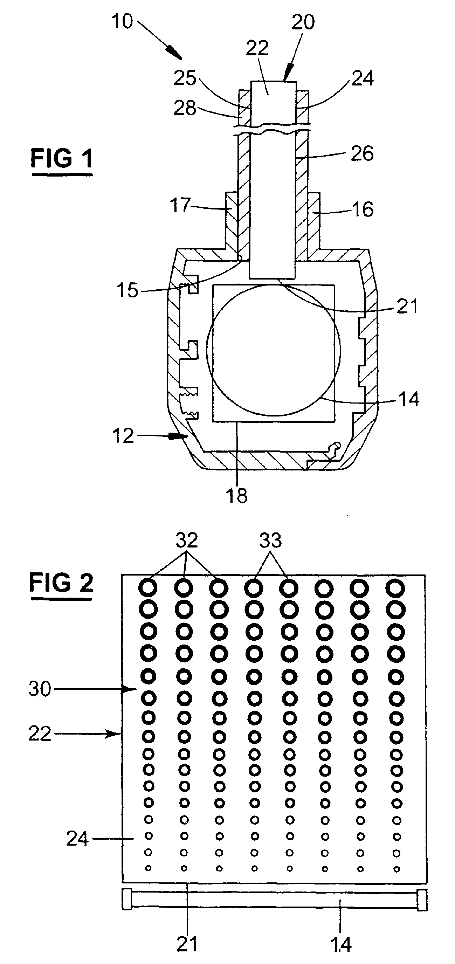

The illuminated display system 10 illustrated in Figure 1 includes an elongate base housing 12 which serves both as a protective cover for an elongate lamp 14 and as a support base for an upstanding display device in the form of a display board 20.

The principal component of display board 20 is a transparent panel 22 of a suitable plastics material having first and second opposing surfaces 24, 25 to be illuminated in use. The first or front surface 24 has a matrix 30 of white translucent spots 32 with hollow transparent interiors 33. In this case, spots 32 are annular spots. As depicted in Figure 2, the spots are arranged in a regular rectangular array in which the annular spots are of progressively increasing size in a direction away from the lower edge face 21 of panel 22, i.e. the edge face illuminated by lamp 14. The spacing of the spots is uniform laterally but also slowly increasing in the direction away from the lower edge of panel 22.

The front surface 24 having spots 30 thereon is overlaid by a clear or transparent white face panel 26, while rear surface 24 has a clear, transparent white or reflecting white face or backing panel 28. If desired eg. for a two-sided sign board, surface 25 may also have a matrix of spots similar to the matrix depicted in Figure 2. The display board assembly 20 is retained between a pair of spaced upstanding parallel flanges 16, 17 that define an opening 15 of housing 12. Panel 22 depends through opening 15 so that its lower edge face 21 is immediately adjacent lamp 14 for illumination of surfaces 24, 25 via the body of the panel.

Lamp 14 is typically a fluorescent tube, but may be any other suitable preferably elongate, form of light source. If a fluorescent tube, housing 12 also retains the associated ballast 18.

A second lamp may of course be provided along the top edge of panel 22, especially where the display board is of large dimensions. In alternative arrangements, lamps may extend along one or both upright edges of the panel.

It has been found that by using the spots of the present invention there is an improvement in illumination. Table 1 compares measured luminance values (B) of a 1200mm high form of board according to Figure 1 with top and bottom lamps, with those (A) for a board having a similar matrix of dots, i.e. solid spots, of similar external shape and dimensions at similar centre-to-centre spacings. The two sets of lux readings were taken at successive positions on the front surface of the panel over its 1200mm height.

**Table 1**

| Position of Measurement | Device A | Device B |
|---|---|---|
| 1 | 148 | 153 |
| 2 | 154 | 165 |
| 3 | 103 | 147 |
| 4 | 85 | 134 |
| 5 | 93 | 128 |
| 6 | 129 | 139 |
| 7 | 134 | 130 |

As required for the device of the earlier patent, the matrix of dots was printed on both surfaces of device B. As preferred for the present invention, the matrix of spots was printed on a single surface of device A. It can be seen from Table 1 that improved illumination resulted for all positions except that closest to the lower lamp. Furthermore, the readings demonstrate an improved evenness of illumination in the central region of the panel: the maximum variation of the lowest from the highest reading is 22%, compared with 44% for the prior device. It will further be noted that the improved illumination occurred for most positions despite the printing of the spots of the present invention being on one surface only.

Whilst there has been described in the foregoing description a preferred embodiment of the present invention, it will be understood that many variations or modifications in details of design or construction may be made without departing from the essential features of the present invention.

## Claims

1. A display device for use in an illuminated display system, said device having a transparent medium (22) with first and second surfaces (24, 25) to be illuminated in use, **characterised in that** at least one of the first and second opposing surfaces has printed thereon a matrix (30) of spots (32), each spot (32) having a hollow transparent interior (33) which allows passage of light therethrough and defines an internal edge for refracting light, thereby enhancing illumination of said at least one surface, the matrix of spots not forming a or part of a message or information to be illuminated.

2. A display device as claimed in claim 1, wherein the spots (32) have a round or ellipsoidal shape.

3. A display device as claimed in claim 1, wherein the spots (32) have a rectangular shape.

4. A display device as claimed in claim 1, wherein the spots (32) have a polygonal shape.

5. A display device as claimed in claim 1, wherein the spots (32) have a triangular shape.

6. A display device as claimed in claim 1, wherein the spots (32) have an irregular shape.

7. A display device as claimed in any one of claims 1 to 6, wherein each spot (32) further defines an external edge for refracting light, thereby enhancing illumination of said at least one surface.

8. A display device according to any one of claims 1 to 7, wherein said matrix (30) covers at least a major portion of the surface to be illuminated for providing an even and increased illumination throughout that portion of the respective surface.

9. A display device as claimed in any one of claims 1 to 8, wherein the hollow transparent interior of each spot (32) is of a shape corresponding to the outer periphery of the spot.

10. A display device as claimed in any one of claims 1 to 8, wherein the hollow transparent interior is of a shape different to the outer periphery of the spot.

11. A display device as claimed in any one of claims 1 to 10, wherein the spots (32) are translucent.

12. A display system as claimed in any one of claims 1 to 10, wherein the spots (32) are opaque.

13. A display device as claimed in any one of claims 1 to 12, wherein the spots (32) are light coloured, eg. white.

14. A display device as claimed in any one of claims 1 to 13, wherein only one of the first and second surfaces has the matrix (30) of spots thereon.

15. A display device as claimed in any one of claims 1 to 13, wherein both the first and second surfaces have the matrix (30) of spots thereon.

16. A display device as claimed in any one of claims 1 to 15, wherein said spots (32) increase in size with increasing distance from an edge of the medium at which a light source is located in use of the display system.

17. A display device as claimed in claim 16, wherein said increase in size is both of the external periphery and of the hollow interior periphery.

18. A display device as claimed in any one of claims 1 to 17, wherein said spots (32) are annular spots.

19. A display device as claimed in any one of claims 1 to 18, wherein said matrix (30) covers substantially the entire surface to be illuminated.

20. An illuminated display system including a display device as claimed in any one of claims 1 to 19, in combination with a light source (14) in optical communication with said transparent medium (22) for illuminating said first and second surfaces (24, 25).

21. A display system as claimed in claim 20, wherein said light source (14) is in said optical communication with the transparent medium (22) at an edge surface of the medium disposed transversely with respect to said first and second surfaces (24, 25).

## Patentansprüche

1. Eine Anzeigevorrichtung für die Verwendung in einem beleuchteten Anzeigesystem. Worin die besagte Vorrichtung über ein transparentes Medium (22) mit ersten und zweiten Oberflächen (24, 25) verfügt, um im Gebrauch beleuchtet zu werden, was **dadurch gekennzeichnet ist, dass** auf mindestens eine der ersten oder zweiten, einander gegenüberliegenden Oberflächen eine Matrix (30) aus Punkten (32) gedruckt ist, wobei jeder Punkt (32) ein hohles, transparentes Inneres hat, was den Durchgang von Licht durch sie hindurch ermöglicht sowie eine innere Kante definiert, um Licht zu brechen, wobei die Beleuchtung der besagten mindestes einen Oberfläche verstärkt wird, und die Punktmatrix bildet keine Nachricht oder Information, die beleuchtet werden soll, oder ist auch kein Teil davon.

2. Eine Anzeigevorrichtung, wie sie in Anspruch 1 beansprucht wird, worin die Punkte (32) eine runde oder ellipsenförmige Form haben.

3. Eine Anzeigevorrichtung, wie sie in Anspruch 1 beansprucht wird, worin die Punkte (32) eine rechteckige Form haben.

4. Eine Anzeigevorrichtung, wie sie in Anspruch 1 beansprucht wird, worin die Punkte (32) eine polygonale Form haben.

5. Eine Anzeigevorrichtung, wie sie in Anspruch 1 beansprucht wird, worin die Punkte (32) eine dreieckige Form haben.

6. Eine Anzeigevorrichtung, wie sie in Anspruch 1 beansprucht wird, worin die Punkte (32) eine unregelmäßige Form haben.

7. Eine Anzeigevorrichtung, wie sie in irgendeinem der Ansprüche 1 bis 6 beansprucht wird, worin jeder Punkt (32) des Weitem eine äußere Kante definiert, um Licht zu brechen, wobei die Beleuchtung der besagten mindestens einen Oberfläche verstärkt wird.

8. Eine Anzeigevorrichtung gemäß irgendeines der Ansprüche 1 bis 7, worin die besagte Matrix (30) mindestens einen Hauptteil der zu beleuchtenden Oberfläche bedeckt, um überall in diesem Bereich der entsprechenden Oberfläche eine gleichmäßige und gesteigerte Beleuchtung bereit zu stellen.

9. Eine Anzeigevorrichtung, wie sie in irgendeinem der Ansprüche 1 bis 8 beansprucht wird, worin das hohle, durchsichtige Innere eines jeden Punkts (32) eine Form hat, die dem äußeren Umfang des Punkts entspricht.

10. Eine Anzeigevorrichtung, wie sie in irgendeinem der Ansprüche 1 bis 8 beansprucht wird, worin das hohle, transparente Innere eine andere Form als der äußere Umfang des Punkts hat.

11. Eine Anzeigevorrichtung, wie sie in irgendeinem der Ansprüche 1 bis 10 beansprucht wird, worin die Punkte (32) lichtdurchlässig sind.

12. Ein Anzeigesystem, wie es in irgendeinem der Ansprüche 1 bis 10 beansprucht wird, worin die Punkte (32) opak sind.

13. Eine Anzeigevorrichtung, wie sie in irgendeinem der Ansprüche 1 bis 12 beansprucht wird, worin die Punkte (32) hell getönt sind, z. B. weiß.

14. Eine Anzeigevorrichtung, wie sie in irgendeinem der Ansprüche 1 bis 13 beansprucht wird, worin sich nur auf einer der beiden ersten und zweiten Oberflächen die Punktmatrix (30) befindet.

15. Eine Anzeigevorrichtung, wie sie in irgendeinem der Ansprüche 1 bis 13 beansprucht wird, worin sich sowohl auf der ersten als auch auf der zweiten Oberfläche die Punktmatrix (30) befindet.

16. Eine Anzeigevorrichtung, wie sie in irgendeinem der Ansprüche 1 bis 15 beansprucht wird, worin die besagten Punkte (32) mit Zunahme des Abstands von einem Rand des Mediums, an welchem sich die Lichtquelle bei der Benutzung des Anzeigesystems befindet, größer werden.

17. Eine Anzeigevorrichtung, wie sie in Anspruch 16 beansprucht wird, worin die besagte Größenzunahme sich sowohl auf den äußeren Umfang als auch auf den hohlen, inneren Umfang bezieht.

18. Eine Anzeigevorrichtung, wie sie in irgendeinem der Ansprüche 1 bis 17 beansprucht wird, worin die besagten Punkte (32) ringförmige Punkte sind.

19. Eine Anzeigevorrichtung, wie sie in irgendeinem der Ansprüche 1 bis 18 beansprucht wird, worin die besagte Matrix (30) im Wesentlichen die gesamte zu beleuchtende Oberfläche bedeckt.

20. Ein beleuchtetes Anzeigesystem, das eine Anzeigevorrichtung enthält, wie sie in irgendeinem der Ansprüche 1 bis 19 beansprucht wird, in Kombination mit einer Lichtquelle (14) in optischer Verbindung mit dem besagten transparenten Medium (22), um die besagten ersten und zweiten Oberflächen (24, 25) zu beleuchten.

21. Ein Anzeigesystem, wie es in Anspruch 20 beansprucht wird, worin die besagte Lichtquelle (14) an einer Randoberfläche des Mediums, die quer in Bezug auf die besagten ersten und zweiten Oberflächen (24, 25) angeordnet ist, mit dem besagten transparenten Medium (22) in besagter optischer Verbindung steht.

## Revendications

1. Dispositif d'affichage pour système d'affichage éclairé, ledit dispositif ayant un support transparent (22) avec une première et une deuxième surfaces (24, 25) à éclairer en cours d'utilisation, **caractérisé en ce qu'**au moins une des première et seconde surfaces opposées a, imprimée dessus, une matrice (30) de points (32), chaque point (32) ayant un intérieur transparent creux (33) qui permet à la lumière de passer à travers et définit un bord interne pour réfracter la lumière, augmentant ainsi l'éclairement d'au moins une des dites surfaces, la matrice des points ne formant pas un message ou une partie d'un message ou d'une information à éclairer.

2. Dispositif d'affichage selon la revendication 1, dans lequel les points (32) ont une forme ronde ou ellipsoïdale.

3. Dispositif d'affichage selon la revendication 1, dans lequel les points (32) ont une forme rectangulaire.

4. Dispositif d'affichage selon la revendication 1, dans lequel les points (32) ont une forme polygonale.

5. Dispositif d'affichage selon la revendication 1, dans lequel les points (32) ont une forme triangulaire.

6. Dispositif d'affichage selon la revendication 1, dans lequel les points (32) ont une forme irrégulière.

7. Dispositif d'affichage selon l'une quelconque des revendications 1 à 6, dans lequel chaque point (32) définit un bord externe pour réfracter la lumière, améliorant ainsi l'éclairage d'au moins l'une des dites surfaces.

8. Dispositif d'affichage selon l'une quelconque des revendications 1 à 7, dans lequel ladite matrice (30) couvre au moins une très grande partie de la surface à éclairer pour permettre un éclairage homogène et accru à travers cette partie de la surface respective.

9. Dispositif d'affichage selon l'une quelconque des revendications 1 à 8, dans lequel l'intérieur creux transparent de chaque point (32) est d'une forme correspondant à la périphérie extérieure du point.

10. Dispositif d'affichage selon l'une quelconque des revendications 1 à 8, dans lequel l'intérieur creux transparent est d'une forme différente de la périphérie extérieure du point.

11. Dispositif d'affichage selon l'une quelconque des revendications 1 à 10, dans lequel les points (32) sont translucides.

12. Dispositif d'affichage selon l'une quelconque des revendications 1 à 10, dans lequel les points (32) sont opaques.

13. Dispositif d'affichage selon l'une quelconque des revendications 1 à 12, dans lequel les points (32) sont de couleur claire, par exemple blanc.

14. Dispositif d'affichage selon l'une quelconque des revendications 1 à 13 dans lequel seule une des première et seconde surfaces a la matrice (30) de points dessus.

15. Dispositif d'affichage selon l'une quelconque des revendications 1 à 13 dans lequel les première et seconde surfaces ont la matrice (30) de points dessus.

16. Dispositif d'affichage selon l'une quelconque des revendications 1 à 15, dans lequel la taille desdits points (32) augmente avec l'augmentation de la distance à partir d'un bord du support sur lequel est située une source de lumière pendant l'utilisation du système d'affichage.

17. Dispositif d'affichage selon la revendication 16, dans lequel ladite augmentation de taille concerne à la fois le périphérique externe et le périphérique creux interne.

18. Dispositif d'affichage selon l'une quelconque des revendications 1 à 17, dans lequel lesdits points (32) sont des points annulaires.

19. Dispositif d'affichage selon l'une quelconque des revendications 1 à 18, dans lequel ladite matrice (30) couvre sensiblement toute la surface à éclairer.

20. système d'affichage éclairé comprenant un dispositif d'affichage selon l'une quelconque des revendications 1 à 19, combiné à une source de lumière (14) en liaison optique avec ledit support transparent (22) pour éclairer lesdites première et seconde surfaces (24, 25).

21. Système d'affichage selon la revendication 20, dans lequel ladite source de lumière (14) est en liaison optique avec le support transparent (22) sur une surface de bord du support disposé transversalement par rapport aux dites première et seconde surfaces (24, 25).
